# EUROPÄISCHE PATENTANMELDUNG

(11) **EP 0 803 350 A2**
(43) Veröffentlichungstag der Anmeldung: **29.10.1997**
(21) Anmeldenummer: 97250128.2
(22) Anmeldetag: 20.04.1997
(51) Int. Cl.: B32B 27/12

(54) **Mehrstoffverbundmaterial und Verfahren zur Herstellung eines flächenförmigen Mehrstoffverbundmaterials aus einem halogenverbindungsfreien flexiblen Kunststoff**

(30) Priorität: 26.04.1996 DE 19616862
(71) Anmelder: Debolon Dessauer Bodenbeläge GmbH, D-06846 Dessau (DE)
(72) Erfinder: Kopf, Manfred, 06846 Dessau (DE); Helbig, Dietmar, 08262 Tannenbergsthal (DE)
(74) Vertreter: Burghardt, Dieter, Dipl.-Ing.

(57) **Zusammenfassung**

Ein flexibles bahnenförmiges Mehrstoffverbundmaterial aus halogenverbindungsfreiem Kunststoff, das aus einem Flächenverbund besteht, wird hergestellt aus mindestens einer flächenhaften homogenen Polymerschmelze und aus einem flächenförmigen Fasermaterial, wobei dieses einen heterogenen Aufbau aufweist und aus mindestens einer homogenen, PVC-freien Polymerregion und aus einer faserhaltigen Basisregion besteht, wobei die aus einem faserhaltigen Material bestehende Basisregion mit einer bestimmten farbigen Motivgestaltung versehen ist und die Polymerregion als transparente Verschleißschicht ausgebildet ist. Zwischen der Polymerregion und der faserhaltigen Basisregion befindet sich eine Durchdringungsregion, bestehend aus faserhaltigem Material mit eingelagertem Polymer aus der Polymerregion mit einer definierten Einlagerungstiefe. Die Durchdringungsregion stellt eine Haftbrücke zwischen der Polymerregion und der faserhaltigen Basisregion dar und wirkt somit haftvermittelnd. Das Mehrstoffverbundmaterial besitzt eine hohe mechanische Wiederstandsfähigkeit und ein gutes Planverhalten und ist aufgrund seiner Eigenschaften als Fußbodenbelag geeignet.

## Beschreibung

Die Erfindung wird im Bereich der Herstellung von belagartigen flexiblen Kunststoffbahnen oder -platten aus einem Thermoplast mit einer verschleißfesten Oberfläche, wobei diese eine einfarbige oder eine mehrfarbige oder farblich gemusterte Gestaltung aufweisen, insbesondere der von oberflächenverschleißfesten Fußbodenbelägen, wirksam und betrifft einen Mehrstoffverbundaufbau eines Fußbodenbelages aus einem PVC-freien Kunststoff und ein Verfahren zur Herstellung eines homogenen flächenförmigen Mehrstoffverbundmaterials.

Als Ausgangsmaterial für Fußbodenbeläge aus einem Kunststoff hat sich Polyvinylchlorid, abgekürzt als PVC bekannt, als ein Thermoplast angeboten, der unter Zusatz eines Weichmachers als PVC-weich unter Verwendung von Füllstoffen zu einem homogenen, bahnenförmigen Fußbodenbelag verarbeitet wird. Die guten Eigenschaften dieses Materials, das pulverförmig als geschmacks- und geruchsloses Produkt als Einsatzmaterial Verwendung findet, bestehen darin, daß es schwer entflammbar ist, ein geringes Wasseraufnahmevermögen und gute elektrische Isoliereigenschaften aufweist. Weiterhin zeichnet sich das PVC durch gute Verarbeitungseigenschaften bei geringen Materialkosten aus. Verarbeitet zu Produkten sind diese gegen vielerlei im normalen Einsatzbereich als Fußbodenbelag vorkommende Reinigungs- und Lösungsmittel beständig und werden von diesen nicht angegriffen. Der auf der Basis von PVC hergestellte, aus Kunststoffbahnen bestehende Fußbodenbelag ist physiologisch einwandfrei und zeichnet sich durch eine verschleißfeste Oberfläche aus, wobei seine Abriebfestigkeit vom Füllstoffgehalt abhängig ist. Im Herstellungsverfahren läßt sich die Oberfläche farblich gestalten und mit einer Musterung versehen. Ferner lassen sich die auf PVC Basis hergestellten Kunststoffbahnen einfach durch Verschweißen zu großflächigen Gebilden verarbeiten.

Obgleich das Einsatzmaterial PVC für die Herstellung von Kunststoffbahnen auf Grund der Stoffeigenschaften über sehr gute Voraussetzungen verfügt und auch für die Weiterverarbeitung, d.h. für das Verlegen von Kunststoffbahnen zu einem flächenabdeckenden Fußbodenbelag Vorteile aufweist, ist diesem Material wegen des hohen Chlorgehaltes ein die Umwelt belastender Mangel eigen. Die Kunststoffbahnen werden aus einem weichmacherhaltigen PVC hergestellt. Hierzu wird das PVC-Pulver vor der Verarbeitung mit einem Weichmacher z.B. zu einer Paste oder zu einer rieselfähigen Trockenmischung (Dryblend) vermischt, die dann durch Aufheizen zu einer homogenen Masse geliert. Als Weichmacher finden verschiedene Stoffe Anwendung, von denen mehr oder weniger gesundheitsschädliche Einflüsse ausgehen, wenn aus dem verarbeiteten Material Weichmacheranteile herausdiffundieren.

Um die genannten Mängel zu umgehen, sind z.B. verschiedene Vorschläge (nach DE 35 07 665 und EP 0 321 760), die gerichtet waren auf die Herstellung von Kunststoffbahnen aus weichmacherfreien Einsatzstoffen, entstanden. Mit den bekannt gewordenen Herstellungsverfahren sollten homogene Kunststoffbahnen erhalten werden, die hinsichtlich der Eigenschaften mit solchen, die auf PVC Basis herstellt worden waren, vergleichbare Eigenschaften aufweisen sollten. Die Zielsetzung konnte nur hinsichtlich des Einsatzes eines weichmacherfreien Endproduktes erfüllt werden. Allen mit diesen Verfahren hergestellten Erzeugnissen ist der Mangel eigen, daß eine vergleichbare farbliche Oberflächengestaltung zu solchen, die aus PVC Material bestehen, nicht erreicht werden kann und erhebliche Einschränkungen hinsichtlich der Verschleißfestigkeit sowie erhöhte Aufwendungen beim Verlegeprozeß in Kauf genommen werden müssen. Die Ursachen für diese Mängel liegen in den Stoffeigenschaften des verwendeten Einsatzmaterials. Nach den bekannten Lösungen ist als Bindemittel für Fußbodenbeläge in hohen Masseanteilen Ethylen-Vinylacetat-Copolymerisat (EVA) zum Einsatz gekommen. Dieses Material ist zu weich und aus diesem Ausgangsmaterial hergestellte Bahnen oder Platten eignen sich nicht als Fußbodenbelag. Ferner ist ein Bedrucken dieses Materials nicht einfach möglich.

Nach der DE 41 14 085 A1 ist ein Verfahren zur Herstellung von als Fußbodenbelag verwendbaren PVC-freien Kunststoff-Folien bekannt geworden. Dabei wird einerseits der Mangel des zum Einsatz kommenden PVC-freien Materials, Ethylen-Vinylacetat-Copolymerisat, das eine klebrige Oberfläche aufweist, keine Oberflächenhärte besitzt und farblich nicht gestaltungsfähig ist, dadurch beseitigt, daß das Bindemittel Ethylen-Vinylacetat-Copolymerisat mit einem ultrahochmolekularen Ethylen-Polymerisat hoher Dichte verschnitten wird und diesem Bindemittelgemisch ein Füllstoff aus Aluminiumhydroxid zu einem Gewichtsanteil von 60 % beigemischt wird. Desweiteren wurden Verarbeitungshilfsmittel in Form von Zinkstearat bzw. sterisch gehinderte Phenole beigegeben. Diesem Einsatzmaterial wurde zur farblichen Gestaltung Farbpigmentträger in Form von Farbgranulat beigemischt. Zur Belagherstellung wird dieses Ausgangsmaterial aufgeschmolzen und in bekannten Kalanderwalzanlagen zu Folien ausgewalzt und als kalandriertes Produkt anschließend dupliziert oder tripliziert, um aus den Folien, gegebenenfalls auch mit unterschiedlicher Farbgebung, einen verwendungsfähigen Fußbodenbelag mit einer definierten Schichtdicke zu erhalten bzw. um diese Folien auf einer Flies- und/oder Gewebeunterschicht aufbringen zu können.

Die so erhaltenen Folien beseitigen den dem Material des PVC-freien Einsatzmaterials, dem reinen Ethylen-Vinylacetat-Copolymerisat, anhaftenden Mangel der klebrigen Oberfläche, ohne dabei die Voraussetzungen für eine Farbgestaltung der Oberfläche zu schaffen. Durch das Duplizieren von Folien unterschiedlicher Einfärbung ist es zwar möglich, einen farblichen Aufbau zu erhalten, jedoch ist eine farbliche Bemusterung ausgeschlossen, da die Folien nicht bedruckt werden können, sondern nur durch den Einsatz von Farbgranulat eine Materialeinfärbung gegeben ist. Der Fußbodenbelag aus duplizierten bzw.triplizierten Folien zeigt neben dem Mangel in der Farbegestaltung, daß sich die Folienschichten bei größeren Belastungen durch Scherkräfte wieder trennen können.

Zur Herstellung eines PVC freien Fußbodenbelages aus Ethylen-Vinylacetat-Copolymerisat ist nach der DE 41 27 107 und der EP A 0 528 194 ein Verfahren bekannt geworden, nach dem das Bindemittel Ethylen-Copolymerisat mit einer sehr geringen Dichte mit 1 Gew.% Zinksterat und einem sterisch gehinderten Phenol versetzt wird, das anschließend unter Wärmezufuhr zuerst vorgemischt und dann weiter durchgemischt wird. Diese plastifizierte Mischung wird anschließend zu einer Folie in einer Kalanderanlage ausgezogen. Diese Folie aus Ethylen-Copolymerisat wird mit einer in einem gleichen Verfahren hergestellten Folie aus Ethylen-Vinylacetat-Copolymerisat mit 8% Polyethylen Anteilen unter Wärmezufuhr dupliziert. Die nach diesem Verfahren gewonnene Mehrschichtfolie wird vorwiegend als durchscheinende Abdeckschicht für Fußbodenbelag verwendet. Die nach diesem Verfahren hergestellte Mehrschichtfolie ist als Fußbodenbelag nicht ausreichend geeignet , weil diese mit einem auf PVC Basis hergestellten Fußbodenbelag hinsichtlich der Möglichkeit einer farblichen und gemusterten Gestaltung nicht konkurrieren kann. So bleibt dieser Mehrschichtfolie nur eine Verwendung als Abdeckschicht für andere weichere Kunststoffbahnen. Da die Abriebfestigkeit dieser Mehrschichtfolie aber auch nicht für Fußbodenbeläge ausreichend ist, wird mit dieser vorgeschlagenen Lösung die mangelhafte Verschleißfestigkeit von PVC freien Fußbodenbelägen nicht beseitigt.

Durch die DE 43 24 137 A1 ist ein Verfahren zur Herstellung von mehrschichtigen Kunststoffbahnen oder -platten bekannt geworden. Diese mehrschichtigen Kunststoffbahnen oder -platten bestehen aus einzelnen Schichten, wobei mindestens eine Schicht aus Ethylen-Alkylakrylat-Copolymer besteht und die Deckschicht transparent ist. Diese mehrschichtige Kunstoffbahn oder -platte kann mit einer Musterung versehen werden, wobei diese Musterung durch Hinterdrucken der transparenten Deckschicht und/oder Bedrucken der darunterliegenden Zwischenschicht erfolgt. Zwecks Bedrucken der transparenten Deckschicht oder einer Zwischenschicht wird diese einer Coronaentladung unterzogen; dabei wird die Oberfläche einer Vorbehandlung unterzogen, damit diese die Druckfarben aufnehmen kann.

Zur Herstellung dieser mehrschichtigen Kunstoffbahnen oder - platten werden in einzelnen Arbeitsgängen zuvor die einzelnen Schichten, d. h. hergestellt, indem die Komponenten der Schichten vorgemischt und plastifiziert werden und anschließend die plastifizierte Masse in geeigneter Weise in die Form einer flächigen Schicht gebracht wird, wobei gegebenenfalls mindestens die Zwischenschicht oder eine Unterschicht mit einem Flies- oder einem Armierungsgewebe versehen wird. Nach der Herstellung einer Deckschicht, einer Zwischenschicht und einer Unterschicht in getrennten Arbeitsgängen wird die Unterseite der Deckschicht und/oder die Oberseite der darunterliegenden Zwischenschicht bedruckt. Die so erhaltenen Zwischenschichten werden in bekannter Weise miteinander verschweißt und der verschweißte Verbund gegebenenfalls auf seiner Unterseite mit einer Wärme- und/oder Schallschutzschicht versehen.

Zur Herstellung der einzelnen Folien wird das polymere Bindemittel und die gegebenenfalls eingesetzten Hilfsmittel, Füllstoffe und dergleichen vorgemischt und über Aggregate, wie z. B. Innenmischer, Zweiwellenextruder, Planetwalzenextruder oder Walzwerke plastifiziert. Nachfolgend wird die plastifizierte Masse mit geeigneten Maschinen, wie Kalandern oder Doppelbandpressen gegebenenfalls zusammen mit einem Flies- oder Armierungsgewebe zu einer Schicht gewünschter Dicke verarbeitet. Das Verbinden der einzelnen Folien durch Verschweißen erfolgt beispielsweise mittels einer Auma- oder einer Doppelbandpresse mit Kühlzone, wobei letztere wegen der Reduzierung von Klebproblemen an der Maschine bevorzugt ist. Gleichzeitig oder anschließend, kann, sofern dies erforderlich wird, auf der Unterseite der Kunststoffbahn eine Wärme- und/oder Schallschutzschicht in üblicher Weise aufgebracht werden.

Diese Kunstoffbahnen oder -platten weisen den Nachteil auf, daß die Farbgestaltung und/oder die farbliche Bemusterung materialbedingt in der gestalterischen Möglichkeit beschränkt ist. Weiterhin ist das Herstellungsverfahren sehr aufwendig und damit das damit hergestellte Produkt sehr teuer. Die Ursache für einen kostenaufwendigen Herstellungsprozeß liegt darin, daß die einzelnen Schichten als Folien getrennt hergestellt werden müssen und dann erneut unter Einsatz von Wärmeenergie miteinander verschweißt werden müssen. Im übrigen verursacht die Vorbehandlung der Oberfläche der Schichten durch Unterziehung dieser einer Koronaentladung, die bei einer Geschwindigkeit von 40 m/min erfolgen muß, zusätzliche Kosten. Durch den Schichtenaufbau dieser Bahnen oder Platten sind die mechanischen Eigenschaften eingeschränkt und bei auftretenden Schwerkräften besteht die Möglichkeit, daß die einzelnen Schichten sich voneinander wieder lösen können.

Obgleich bei der Herstellung dieser Bahnen oder Platten aus mehreren Schichten umweltfreundliche Kunststoffe anstelle des PVC zum Einsatz gekommen sind, besitzen diese mehrschichtigen Platten oder Bahnen nicht vergleichbare gute Eigenschaften wie ein aus PVC hergestellter Bodenbelag. Diese Nachteile liegen in der eingeschränkten Farbgestaltung und Bemusterung der einzelnen Schichten. Bedingt durch den Schichtenaufbau ist dieses bahnenförmige oder plattenförmige Material nur begrenzt mechanisch belastbar, da bei Auftreten von großen Schwerkräften sich die einzelnen folienartigen Bahnen voneinander lösen können. Außerdem ist das Herstellungsverfahren sehr energie- und kostenaufwendig, da die einzelnen Schichten getrennt hergestellt werden, bevor sie zu mehrschichtigen Bahnen oder Platten verschweißt werden können.

Obgleich viele verschiedene Verfahren zur Oberflächengestaltung von bahnförmigen Gebilden aus PVC freiem Kunststoff für Fußbodenbeläge bekannt geworden sind, bleiben die farblichen Strukturen der danach hergestellten Produkte nicht scharf begrenzt. Mit diesen bekannten Herstellungsverfahren zur Oberflächengestaltung sind gleichzeitig keine befriedigenden Ergebnisse hinsichtlich der Abrieb- und Kratzfestigkeit dieser Kunststoffbahnen erreicht worden.

Das Ziel der Erfindung besteht einerseits in der Vermeidung einer nicht völlig auszuschließenden Gesundheitsgefährdung und einer Umweltgefahr, die bei der Verwendung bzw. dem Einsatz von weichmacherhaltigem, auf der Basis von PVC Einsatzstoffen hergestelltem, bahnförmigem Fußbodenbelag gegeben ist, und andererseits, bei einer Verwendung anderer chlorverbindungs- und weichmacherfreier Ausgangsstoffe sowohl in der Beibehaltung der positiven Eigenschaften von auf PVC-Basis hergestellten Kunststoffbahnen bezüglich der Verschleißfestigkeit, der Farb- und Motivgestaltung und der günstigen Verwendungsvoraussetzungen, d.h. der positiven Möglichkeiten beim Verlegen, und besteht darüber hinausgehend, bei dem Einsatz chlorverbindungsfreier Kunststoffe, in der Sicherung eines hohen Gebrauchswertes von Flächengebilden für Fußbodenbeläge bezüglich des Planverhaltens sowie der Verlegevoraussetzungen und zusätzlich zur erforderlichen Verschleißfestigkeit in einer hohen Widerstandsfestigkeit gegenüber Druck- und Zugbelastungen.

Der Erfindung liegt die Aufgabe zugrunde, ein aus halogenverbindungsfreien Kunststoffen bestehendes flexibles bahnenförmiges, eine Musterungsgestaltung aufweisendes Flächenmaterial mit einer verschleißfesten Oberfläche, insbesondere für Fußbodenbeläge, bestehend aus einem Mehrstoffverbund aus mindestens zwei homogenen Einsatzmaterialien, aus einem homogenen Polymer oder einem Polymergemisch mit oder ohne Zuschlagstoffen und aus einem faserhaltigen flächenförmigen Material, das eine Oberflächengestaltung z.B. hinsichtlich eines Musters und der einsetzbaren Farben zuläßt, und ein energiesparendes Verfahren zur Herstellung eines bahnenförmigen heterogenen flächenförmigen Mehrstoffverbundmaterials zu entwickeln.

Diese Aufgabe wurde dadurch gelöst, daß ein Mehrstoffverbundmaterial und ein Verfahren zur Herstellung flächenförmigen Mehrstoffverbundmaterials aus einem halogenverbindungsfreien flexiblen Kunststoff mit einer hohen mechanischen Widerstandsfähigkeit, geeignet als Fußbodenbelag entwickelt wurde, das erfindungsgemäß einen heterogenen Aufbau aufweist und aus mindestens einer homogenen, PVC-freien, flächenförmigen Polymerregion, aus einer Durchdringungsregion und aus einer flächenförmigen, faserhaltigen Basisregion besteht, wobei in der Durchdringungsregion Materaleinlagerungen aus dem Polymer der Polymerregion zwischen den Fasern aus der Basisregion bis zu einer definierten Tiefe der faserhaltigen Basisregion vorhanden sind und eine formschlüssige Verbindung zwischen Polymer und Fasern der flächenförmigen faserhaltigen Basisregion besteht.

Weiterhin wurde ein Mehrstoffverbundmaterial aus einem halogenverbindungsfreien Kunststoff mit einer verschleißfesten Oberfläche entwickelt, das erfindungsgemäß einen heterogenen Aufbau aufweist und aus mehreren, mindestens zwei homogenen, PVC-freien Polymerregionen, einem polymeren Verschleißauftrag und einer flächenhaften, faserhaltigen Mittelregion besteht, wobei diese flächenförmige faserhaltige Mittelregion zwischen dem polymeren Verschleißauftrag und der Polymerregion vorgesehen ist und sich sowohl zwischen der Polymerregion und dem Verschleißauftrag einerseits und der flächenförmigen faserhaltigen Mittelregion andererseits je eine Durchdringungsregion erstreckt, wobei zwischen den Fasern der flächenförmigen faserhaltigen Mittelregion beidseitig Materaleinlagerungen bis zu einer definierten Einlagerungstiefe aus der Polymerregion und aus dem Verschleißauftrag vorhanden sind und innerhalb der flächenförmigen faserhaltigen Mittelregion eine Grenzschicht und aus den beiden polymeren Materialien liegt, und Fasern der flächenförmigen faserhaltigen Mittelregion sich brückenartig zwischen den beiden Polymermaterialien der Polymerregion und des Verschleißauftrages erstrecken und die Fasern sowohl mit dem Materal der Polymerregion als auch mit dem des Verschleißauftrages eine formschlüssige Verbindung bilden.

Außerdem wurde ein Mehrstoffverbundmaterial aus einem flexiblen halogenverbindungsfreien Kunststoff mit einer verschleißfesten Oberfläche, insbesondere für einen farbigen oder farbig strukturierten Fußbodenbelag entwickelt, bei dem die flächenförmige, faserhaltige Basisregion mit einer bestimmten, vorwiegend aus farbigen Motiven bestehenden Gestaltungszone versehen ist und die Polymerregion als ein transparenter Verschleißauftrag ausgebildet ist.

Hierzu ist die flächenförmige, faserhaltige Mittelregion mit einer bestimmten, vorwiegend aus farbigen Motiven bestehenden Gestaltungszone versehen und die Polymerregion ist transparent oder farbig getönt und der Verschleißauftrag transparent oder farbig ausgebildet.

Die zwischen zwei homogenen nicht verbundfähigen PVC-freien Polymermaterialien vorgesehene, als Haftbrücke dienende flächenförmige faserhaltige Basisregion oder Mittelregion ist als Träger für die aus ein- oder mehrfarbigen Motiven bestehende Musterung als Gestaltungszone ausgebildet, wobei die flächenförmige faserhaltige Basisregion oder Mittelregion aus einem Material mit darin geordnet oder ungeordnet liegenden, textilen oder/und mineralischen Fasern besteht. Die Musterung der Gestaltungszone in der flächenförmigen faserhaltigen Basisregion oder der Mittelregion besteht aus einem im Druckverfahren hergestellten teilflächenförmigen Auftrag aus in einem thermoplastischen Bindemittel enthaltenen organischen oder/und anorganischen Farbpigmenten auf einer Innenoberfläche dieser, wobei die Fasern, auf die das Druckmuster aufgebracht ist, als Gestaltungszone vollständig vom Polymer umschlossen sind.

Zur Sicherung der Abriebfestigkeit besteht der Verschleißauftrag aus einem Gemisch von einer oder mehreren Olefinkomponenten und einer oder mehreren thermoplastischen Elastomerkomponenten, wobei die Molekülgruppen der Stoffkomponenten ein Durchdringungsnetzwerk bilden, in dem die thermoplastischen Elastomerkomponenten als diskontinuierliche Phase und die Olefinkomponenten als die kontinuierliche Phase im Netzwerkverbund enthalten sind.

Da sich das aus PVC-freiem Polymer bestehende Mehrstoffverbundmaterial auf einer Verlegeebene nicht rutschfest, z.B. durch Verkleben verlegen läßt, ist nach einem weiteren erfinderischen Merkmal die flächenförmige faserhaltige Basisregion speziell als eine Haftbrücke zwischen der Polymerregion und einer Verlegeebene für das erfindungsgemäß aufgebaute Mehrstoffverbundmaterial, das als Fußbodenbelag eingesetzt wird, ausgebildet.

Weiterhin weist das Mehrstoffverbundmaterial erfindungsgemäß zwischen zwei homogenen nicht verbundfähigen PVC-freien Polymerstoffen eine als Haftbrücke ausgebildete, flächenförmige faserhaltige Region auf.

Der Verschleißauftrag des flexiblen Mehrstoffverbundmaterials weist zur Gestaltung der Oberfläche eine vorzugsweise durch eine thermoplastische Verformung entstandene, reliefartige Struktur auf.

Weiterhin wurde die Aufgabe, ein Verfahren zur Herstellung von hier vorgeschlagenem, erfindungsgemäß ausgebildetem Mehrstoffverbundmaterial zu entwickeln, dadurch gelöst, daß ein Verfahren zur Herstellung eines heterogenen flächenförmigen Mehrstoffverbundmaterials, bestehend aus mindestens einem homogenen, halogenverbindungsfreien Kunststoffmaterial und einem als Gestaltungsmaterial und oder als Haftbrücke zu einer Verlegeebene dienenden Fasermaterial, entwickelt, bei dem erfindungsgemäß ein Polymer aufgeschmolzen wird, aus dieser Polymerschmelze über eine Formgebungseinrichtung ein aufgeschmolzenes Polymer als Schmelzezone mit einer definierten Dicke hergestellt wird und im Zustand der thermoplastischen Schmelze das Polymer gleichzeitig mit der flächenförmigen faserhaltigen Basisregion bzw. Mittelregion, die auf der dem thermoplastischen, polymeren Schmelzefilm zugewandten Fläche keine oder eine farbliche und/oder eine musterhafte Gestaltung aufweist, in den Fügespalt eines aus mindestens zwei Fügemitteln bestehenden Preßwerkes eingeführt wird und unter der Einwirkung einer linien- oder flächenförmig erzeugten, auf die flächenförmigen faserhaltigen Regionen und die aus einem Polymer bestehende Schmelzezone ausgeübten Preßkraft ein Mehrstoffverbund durch Einpressen des Polymers aus der Schmelzezone in die Zwischenräume der die faserhaltigen Regionen bildenden Fasern bis zu einer definierten Tiefe der flächenförmigen faserhaltigen Regionen mit einem formschlüssigen Haftverbund zwischen dem Polymermaterial und den Fasern des faserhaltigen Regionen hergestellt wird und der Mehrstoffverbund anschließend abgekühlt wird.

Ferner wurde zur Herstellung eines heterogenen Mehrstoffverbundmaterials, bestehend aus mindestens zwei homogenen, halogenverbindungsfreien Kunstoffmaterialien und einer als Gestaltungszone und/oder als Haftbrücke zu einer Auslegebene ausgebildeten und aus Fasermaterial bestehenden Basisregion ein Verfahren vorgeschlagen, bei dem erfindungsgemäß ein Polymer aufgeschmolzen wird, aus dieser Polymerschmelze über eine Formgebungseinrichtung eine flächenhaft vorgeformte polymere Schmelze mit einer definierten Stärke hergestellt wird und im Zustand der flächenhaft vorgeformten polymeren thermoplastischen Schmelze das Polymer gleichzeitig mit der vorzugsweise aus einem Faservlies bestehenden flächenförmigen faserhaltigen Basisregion bzw. Mittelregion, die auf der der thermoplastischen polymeren Schmelze zugewandten Fläche eine farbliche und/oder musterhafte Gestaltung aufweist, in einen Fügespalt eines aus mindestens zwei Fügemitteln bestehenden Preßwerkes eingeführt wird und unter der Einwirkung einer linien- oder flächenförmig erzeugten, auf die flächenförmige faserhaltige Basisregion bzw. Mittelregion und die aus einem Polymer bestehenden flächenhaft vorgeformten Schmelze ausgeübten Anpreßkraft ein Mehrstoffverbund durch Einpressen des Polymers aus der flächenhaft vorgeformten Schmelze in die Zwischenräume der das flächenförmige faserhaltige Basisregion bzw. Mittelregion bildenden Fasern bis zu einer definierten Tiefe der flächenförmigen faserhaltigen Basisregion bzw. Mittelregion mit einem formschlüssigen Haftverbund zwischen dem die Faserstruktur durchdringenden Polymermaterial und den Fasern hergestellt wird, und darauffolgend dieses Mehrstoffverbundmaterial unter Anwendung der gleichen Verfahrenstechnik mit einem weiteren polymeren Verschleißauftrag versehen wird, wobei dieser im Zustand der thermoplastischen Schmelze auf die erste Polymerregion des Mehrstoffverbundmaterials im thermoplastischen Zustand aufgebracht und anschließend dieser Haftverbund abgekühlt wird.

Weiterhin wird die erste homogene PVC-freie Polymerregion mit bekannter Technik aus einer Polymerschmelze hergestellt und diese als flächenhafte vorgeformte Schmelze im thermoplastischen Zustand einseitig mit einer als Haftbrücke zur Verlegeebene dienenden unbedruckten faserhaltigen flächenförmigen Basisregion und andererseits mit einer als zwischen zwei nicht fügbaren Polymermaterialien der Polymerregion und dem Verschleißauftrag dienenden Haftbrücke ausgebildeten faserhaltigen flächenförmigen und gestaltungsfähigen Mittelregion über eine Anpreßkraft ausübende Fügemittel formschlüssig verbunden wird, wobei auf der als Haftbrücke ausgebildeten faserhaltigen flächenförmigen Mittelregion ein weiteren, aus PVC-freiem Polymer bestehender, homogener Verschleißauftrag, der mit gleicher Verfahrenstechnik aus einer Polymerschmelze erzeugt, im Zustand der thermoplastischen Schmelze in die Faserstruktur der faserhaltigen flächenförmigen Region mittels eine Anpreßkraft ausübenden Fügemitteln eingebracht und mit den Fasern der faserhaltigen flächenförmigen Mittelregion formschlüssig Verbindung als Haftbrücke hergestellt wird.

Zur weiteren Ausgestaltung des vorgeschlagenen Verfahrens zur Herstellung eines heterogenen Mehrstoffverbundmaterials wird in einem getrennten Verfahren ein formschlüssiger Haftverbund zwischen einem mit einer bekannten Technik aus einer Polymerschmelze hergestellten ersten homogenen PVC-freien Polymer bestehender Verschleißauftrag und einer als Haftbrücke dienenden, bedruckten Mittelregion, im thermoplastischen Zustand der Polymerschmelze unter Einwirkung einer durch Fügemittel ausgeübten Kraft hergestellt, und anschließend dieser zuvor aus Verschleißauftrag und bedruckter, als Haftbrücke zwischen zwei nicht fügbaren Polymermaterialien dienender Mittelregion bestehender mehrregionaler Haftverbund gleichzeitig mit einem als Haftbrücke zur Verlegeebene dienenden faserhaltigen flächenförmigen Basisregion einem Fügespalt eines aus mindestens zwei Fügemitteln bestehenden Preßwerkes zugeführt wird, wobei gleichzeitig eine aus einer Polymerschmelze in bekannter Weise hergestellte, flächenhaft vorgeformte Polymerschmelze im Zustand der thermoplastischen Schmelze zwischen dem mehrregionalen Haftverbund und der faserhaltigen flächenförmigen Basisregion eingebracht wird, wobei zwischen dieser und der Polymerregion des Haftverbundes einerseits und der faserhaltigen flächenförmigen Mittelregion andererseits eine formschlüssige Verbindung hergestellt wird.

Für die farbliche Gestaltung und Musterung des flächenförmigen heterogenen Mehrstoffverbundmaterials wird die faserhaltige flächenförmige Basisregion oder die Mittelregion vor Zuführung mit einer Fügemechanik in den Fügespalt zwischen zwei hierzu vorgesehenen Fügemitteln in einem Druckverfahren unter Einsatz von in einem thermoplastischen Polymer als Bindemittel eingemischten organischen oder/und anorganischen Farbpigmenten mit einer aus farbigen Motiven bestehenden Musterung teilflächenförmig bedruckt. Hierzu wird die faserhaltige flächenförmige Basisregion oder die Mittelregion im Rotationstiefdruckverfahren oder im Rotationssiebdruckverfahren oder Thermodruckverfahren mit einer ein- oder mehrfarbigen, aus Motiven bestehenden Musterung bedruckt. Hierbei wird die durch die dem Fügeespalt zugeführte, erwärmte, d.h. sich im thermoplastischen Zustand befindende Polymerschmelze, die mit einem Motiv bedruckte faserhaltige flächenförmige Basisregion bzw. die Mittelregion erwärmt und dadurch das für die Druckfarben als Bindemittel verwendete thermoplastische Polymer angeschmolzen und damit haftvermittelnd in die formschlüssige Verbindung zwischen den Fasern der faserhaltigen flächförmigen Basisregion bzw. der Mittel und der Polymerschmelze integriert.

Ferner wurde herausgefunden, daß für den erfindungsgemäßen Aufbau und zur Realisierung des vorgeschlagenen Verfahrens als Einsatzmaterialien folgende Polymere sich am besten eignen.

Für den transparenten Verschleißauftrag wird als Polymer eine Polymerlegierung mit folgender Materialzusammensetzung und Stoffeigenschaften verwendet:

### Komponente 1: Copolymeres Polypropylen, vorzugsweise Pfropfpolymer aus Maleinsäureanhydrid gepfropft auf Polypropylen.

| | |
|---|---|
| Schmelzbereich: | 130°C - 180°C, vorzugsweise |
| | 150°C - 160°C |
| Dichte: (bei 20°C) | 0,8 - 0,95 g/cm³, vorzugsweise |
| | 0,9 - 0,91 g/cm³ |

### Komponente 2: Thermoplastische Elastomercompounds auf der Grundlage von Styren-Ethylen-Butylen-CO-Blockpolymer

| | |
|---|---|
| Dichte: (bei 20°C) | 0,85 - 0,95 g/cm³, vorzugsweise |
| | 0,89 - 0,90 g/cm³ |

Die Legierung aus beiden Komponenten liegt im Bereich

| | |
|---|---|
| | 70 Masse - % Komponente 1 |
| | 30 Masse - % Komponente 2 |
| vorzugsweise | 85 - 80 Masse % Komponente 1 |
| | 15 - 20 Masse % Komponente 2 |

Als Material für die Polymerregion, die nicht als ein transparenter Verschleißauftrag dient, wird ein gefülltes Polymer wie folgt eingesetzt:

### Komponente 1:

Polyolefin - Elastomere, vorzugsweise Copolymere von Ethylen und Bausteinen der Reihe C₄ H₈ bis C₈ H₆ vorzugsweise Octen 1

| | |
|---|---|
| Schmelzbereich | 80 - 120°C |
| Dichtebereich: | 0,80 - 0,9 g/cm³, vorzugsweise |
| | 0,86 - 0,88 g/cm³ |

### Komponente 2:

Calziumkarbonat, vorzugsweise feinvermahlenes kristallines Produkt

| | |
|---|---|
| Dichte: | 2,60 - 2,90 g/cm³ vorzugsweise |
| | 2,65 - 2.75 g/cm³ |
| Mohs-Härte: | 2,90 - 3,10 |

### Komponente 3:

Magnesiumhydroxid der Reinheit > 99 %

| | |
|---|---|
| Dichte: | 2,30 - 2,50 g/cm³, vorzugsweise 2,4 |
| Feuchtegehalt: | < 1 Masse % |

### Komponente 4:

### Bariumsulfat

| | |
|---|---|
| Feuchtegehalt | < 1 Masse % |

Polymermischung besteht aus:

| | |
|---|---|
| Komponente 1: | 30 - 40 Masse % Polyolefin Elastomer |
| Komponente 2: | 20 - 40 Masse % Calciumcarbonat |
| Komponente 3: | 10 - 40 Masse % Magnesiumhydroxid |
| Komponente 4: | 0 - 20 Masse % Schwerspat |

vorzugsweise wir folgende Polymermischung bevorzugt:

| | |
|---|---|
| Komponente 1: | 30 - 35 % Polyolefin Elastomer (Octen - 1 -Copolymer mit Ethylen) |
| Komponente 2: | 30 - 40 % Calziumcarbonat |
| Komponente 3: | 35 - 40 % Magnesiumhydroxid |

Mit dem erfindungsgemäß vorgeschlagenen Aufbau eines flexiblen, bahnenförmigen Mehrstoffverbundmaterials aus chlorverbindungsfreien Kunststoffen, insbesondere für den Einsatz als Fußbodenbelag, liegt ein Flächenmaterial vor, das einerseits auf Grund des weiterhin erfindungsgemäß gestalteten Herstellungsverfahrens mit geringen Energiekosten und andererseits durch die Verwendung billiger Einsatzmaterialien kostengünstig hergestellt werden kann und gleichzeitig eine hohe Qualität aufweist, die die bekannten positiven Eigenschaften von auf PVC Basis hergestellten Fußbodenbelägen hinsichtlich des Planverhaltens, der Anriebfestigkeit der Oberfläche des Fußbodenbelages, der Widerstandsfestigkeit gegenüber Zug- und Druckbelastungen und gegenüber in Reinigungsmitteln enthaltenen Lösungsmitteln übertrifft. Die hohe Zug- und Druckbelastbarkeit sowie das gute Planverhalten des Flächenmaterials sind zurückzuführen auf die flächenförmige(n) Faserschicht(en), die im Verbund als Flächenbewehrung wirkt(en). Letztlich besteht eine große farbliche und durch farbliche Muster gekenn-zeichnete Gestaltungsmöglichkeit. Weiterhin ist durch den erfindungsgemäßen Aufbau die Möglichkeit einer mit Effekten versehenen plastischen Motivgestaltung gegeben.

Die Erfindung soll nachfolgend an einem Ausführungsbeispiel näher erläutert werden. In der zugehörigen Zeichnung zeigen:

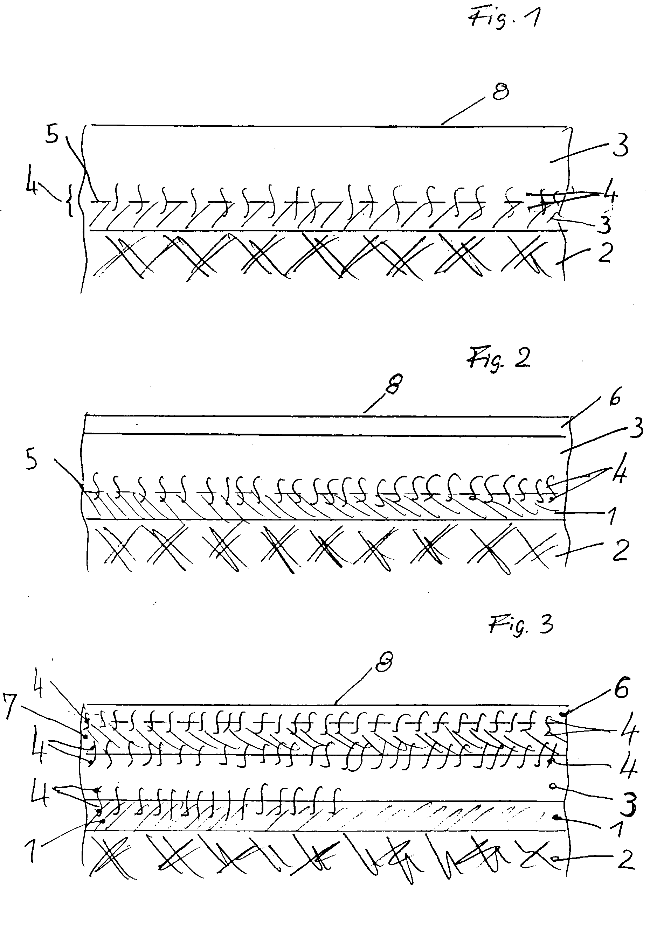

- Fig. 1: einen Aufbau eines erfindungsgemäß gestalteten Mehrstoffverbundmaterials in Schnittdarstellung, bestehend aus drei Regionen, einer aus einem faserhaltigen Flächengebilde bestehenden Basisregion, einer aus Fasern und Polymereinlagerungen bestehenden Durchdringungsregion mit einer darin liegenden Farbgebungs- und Musterungszone und einer aus einem PVC-freien Bindemittel, einer als Verschleißschicht ausgebildeten Polymerregion,
- Fig. 2: eine Schnittdarstellung eines erfindungsgemäß ausgebildeten Mehrstoffverbundmaterials, bestehend aus fünf Regionen, einer aus einem Flächengebilde bestehenden faserhaltigen Mittelregion, je einer aus Fasern und Polymereinlagerungen bestehenden oberen und unteren Durchdringungsregion, wobei in der oberen Durchdringungsregion eine Farbgebungs- und Musterungszone vorgesehen ist und je einer aus einem PVC-freien Bindemittel, einem Polymer bzw. Polymergemisch oder einem gefüllten Polymer, bestehenden oberen und unteren Polymerregion,
- Fig. 3: eine Schnittdarstellung eines erfindungsgemäß ausgebildeten Mehrstoffverbundmaterials, bestehend aus sieben Regionen, je einer aus einem Flächengebilde bestehenden oberen faserhaltigen Mittelregion und unteren faserhaltigen Basisregion, je einer aus Fasern und Polymereinlagerungen bestehenden oberen, mittleren und unteren Durchdringungsregion, wobei in der oberen Durchdringungsregion eine Farbgebungs- und Musterungszone angeordnet ist, und je einer aus einem PVC-freien Bindemittel, einem Polymer bzw. Polymergemisch oder einem gefüllten Polymer bestehenden oberen und unteren Polymerregion.

Ein bahnenförmiges flexibles Mehrstoffverbundmaterial, das insbesondere für einen ein- oder mehrfarbig gemusterten oder ungemusterten Fußbodenbelag verwendet wird, weist einen mehrregionalen Aufbau auf. Als unterste Region ist häufig eine aus einem faserhaltigen Flächengebilde bestehende Basisregion 1, die aus geordneten oder ungeordneten textilen und/oder mineralischen Fasern besteht, vorgesehen, die der Haftvermittlung des Mehrstoffverbundmaterials zur Auslegefläche 2 einerseits und andererseits zu einer homogenen, PVC-freien, thermoplastischen Polymerregion 3 dient. Zwischen der flächenförmigen faserhaltigen Basisregion 1 und der Polymerregion 3 besteht eine Durchdringungsregion 4, die durch Einlagerung von polymerem Material aus der Polymerregion 3 in nicht dargestellte Zwischenräume der ebenfalls nicht dargestellten Fasern des faserhaltigen Flächengebildes der Basisregion 1 bis zu einer Tiefe von mindestens 20 %, die sich in die Basisregion 1 erstreckt, gebildet ist. In dem vorliegenden zweiregionalen Aufbau ist die faserhaltige Basisregion 1 der Träger für eine mit ein- oder mehrfarbigen Motiven versehene Musterung-/Gestaltung des Mehrstoffverbundmaterials. Diese farbliche bzw. musterhafte Gestaltung wird in einem Druckverfahren auf das faserhaltige Flächengebilde, das die Basisregion 1 bildet, auf- bzw. in die Fasern eingebracht und stellt sich dort als eine aus einem teilflächenförmigen, aus in einem thermoplastischen Bindemittel enthaltenen anorganischen oder/ und organischen Farbpigmenten bestehende Gestaltungszone 5 dar. Diese Gestaltungszone 5 befindet sich innerhalb der oberen Durchdringungsregion 4. Die aus einem PVC-freien Kunststoff bestehende homogene thermoplastische Polymerregion 3 ist hier als transparente Verschleißschicht ausgebildet, die vorteilhafterweise zur Erhöhung der Abriebfestigkeit aus einem Gemisch von einer oder mehrerer Olefinkomponente(n) und einer oder mehreren thermoplastischen Elastomerkomponente(n) besteht. In diesem Gemisch bilden die Molekülgruppen der Stoffkomponenten ein Durchdringungsnetzwerk, in dem die thermoplastischen Elastomerkomponenten als diskontinuierliche Phase und die Olefinkomponeten als kontinuierliche Phase im Netzwerkverbund enthalten sind.

Bei einem dreiregionalen Aufbau des Mehrstoffverbundmaterials, der vorwiegend bei einer einfarbigen Gestaltung gewählt wird, gebildet aus einer Basisregion 1, die aus einem faserhaltigen Flächengebilde besteht, einer Durchdringungsregion 4 und aus einer Polymerregion 3, ist auf der Polymeregion 3 noch eine Verschleißschicht 6 aus PVC-freiem Kunststoff vorgesehen. Sofern die eingesetzten Materialien für den Verschleißauftrag 6 und für die Polymerregion 3 sich mit den bekannten Mitteln auf Grund ihrer Materialeigenschaften nicht verbinden/fügen lassen, ist zwischen dem polymeren Verschleißauftrag 6 und der Polymerregion 3 eine faserhaltige Mittelregion 7, die im Aufbau der der Basisregion 1 entspricht, vorgesehen. Die faserhaltige Mittelregion 7 kann -in gleicher Weise wie die faserhaltige Basisregion 1- als Träger einer aus ein- oder mehrfarbigen Motiven bestehenen Gestaltung/Musterungszone 5 im Mehrstoffverbundmaterial eingesetzt werden. Beiderseitig der faserhaltigen Mittelregion 7 ist zwischen dieser und der jeweils angrenzenden Polymerregion 3 bzw. dem aus PVC-freien Kunststoff bestehenden Verschleißauftrag 6 eine Durchdringungsregion 4 ausgebildet. In dieser Durchdringungsregion 4 ist in den Zwischenräumen -wie bereits oben ausgeführtzwischen den Fasern Material aus dem Verschleißauftrag 6 bzw. das aus der Polymerregion 3 eingelagert und bildet hier durch Einlagerungen von Polymeren in die Fasermatrix einen formschlüssigen Haftverbund zwischen Faseroberfläche und Polymer .

Der Verschleißauftrag 6 ist bei Bedarf auf seiner Oberfläche 8 mit einer vorzugsweise durch eine thermoplastische Verformung entstandenen reliefartigen Struktur (nicht dargestellt) versehen.

Die Herstellung des erfindungsgemäßen bahnenförmigen flexiblen Mehrstoffverbundmaterials erfolgt vorzugsweise in herkömmlichen Mehrwalzenstühlen, wobei bei einem dreiregionalen Aufbau des Mehrstoffverbundmaterials dem nicht dargestellten Walzenspalt zwischen einem ebenfalls nicht gezeigten Walzenpaar einerseits das faserhaltige Material einer Basisregion 1 oder einer Mittelregion 7 und andererseits gleichzeitig ein unmittelbar zuvor in einem Extruder aufgescholzenes Polymer als thermoplastische Schmelze über eine Formgebungseinrichtung als Schmelzefläche für eine Polymerregion 3 oder für einen Verschleißauftrag 6 zugeführt werden. Durch eine durch die Walzen einerseits auf das faserhaltige Material der Basisregion 1 oder der Mittelregion 7 und andererseits auf das flächenhaft vorgeformte und mit einer durch Druck und Temperatur gesteuerten definierten Schmelzeviskosität aufgeschmolzene Polymer für die Polymerregion 3 oder für den Verschleißauftrage 6 ausgeübte Anpreßkraft wird jeweils in den Zwischenräumen zwischen den Fasern des faserhaltigen Materials der Basisregion 1 oder der Mittelregion 7 Polymer eingelagert und in einer Durchdringungsregion 4 formschlüssig miteinander verbunden.

Als Polymer für den transparenten Verschleißauftrag 6 wird eine Polymerlegierung mit folgender Materialzusammensetzung und Stoffeigenschaften verwendet:

### Komponente 1: Copolymeres Polypropylen, vorzugsweise Pfropfpolymer aus Maleinsäureanhydrid gepfropft auf Polypropylen.

| | |
|---|---|
| Schmelzbereich: | 130°C - 180°C, vorzugsweise |
| | 150°C - 160°C |
| Dichte: (bei 20°C) | 0,8 - 0,95 g/cm³, vorzugsweise |
| | 0,9 - 0,91 g/cm³ |

### Komponente 2: Thermoplastische Elastomercompounds auf der Grundlage von Styren-Ethylen-Butylen-CO-Blockpolymer

| | |
|---|---|
| Dichte: (bei 20°C) | 0,85 - 0,95 g/cm³, vorzugsweise |
| | 0,89 - 0,90 g/cm³ |

Die Legierung aus beiden Komponenten liegt im Bereich

| | |
|---|---|
| | 70 Masse - % Komponente 1 |
| | 30 Masse - % Komponente 2 |
| vorzugsweise | 85 - 80 Masse % Komponente 1 |
| | 15 - 20 Masse % Komponente 2 |

Als Material für die Polymerregion, die nicht als ein transparenter Verschleißauftrag dient, wird ein gefülltes Polymer wie folgt eingesetzt:

### Komponente 1:

Polyolefin - Elastomere, vorzugsweise Copolymere von Ethylen und Bausteinen der Reihe C₄ H₈ bis C₈ H₆ vorzugsweise Octen 1

| | |
|---|---|
| Schmelzbereich | 80 - 120°C |
| Dichtebereich: | 0,80 - 0,9 g/cm³, vorzugsweise |
| | 0,86 - 0,88 g/cm³ |

### Komponente 2:

Calziumkarbonat, vorzugsweise feinvermahlenes kristallines Produkt

| | |
|---|---|
| Dichte: | 2,60 - 2,90 g/cm³ vorzugsweise |
| | 2,65 - 2.75 g/cm³ |
| Mohs-Härte: | 2,90 - 3,10 |

### Komponente 3:

Magnesiumhydroxid der Reinheit > 99 %

| | |
|---|---|
| Dichte: | 2,30 - 2,50 g/cm³, vorzugsweise 2,4 |
| Feuchtegehalt: | < 1 Masse % |

### Komponente 4:

### Bariumsulfat

| | |
|---|---|
| Feuchtegehalt | < 1 Masse % |

Polymermischung besteht aus:

| | |
|---|---|
| Komponente 1: | 30 - 40 Masse % Polyolefin Elastomer |
| Komponente 2: | 20 - 40 Masse % Calciumcarbonat |
| Komponente 3: | 10 - 40 Masse % Magnesiumhydroxid |
| Komponente 4: | 0 - 20 Masse % Schwerspat |

vorzugsweise wir folgende Polymermischung bevorzugt:

| | |
|---|---|
| Komponente 1: | 30 - 35 % Polyolefin Elastomer (Octen - 1 -Copolymer mit Ethylen) |
| Komponente 2: | 30 - 40 % Calziumcarbonat |
| Komponente 3: | 35 - 40 % Magnesiumhydroxid |

### Aufstellung der verwendeten Bezugszeichen

- 1: Basisregion
- 2: Auslegefläche
- 3: Polymerregion
- 4: Durchdringungsregion
- 5: Gestaltungszone
- 6: Verscheißauftrag
- 7: Mittelregion
- 8: Oberfläche

## Patentansprüche

1. Mehrstoffverbundmaterial aus halogenverbindungsfreiem Kunststoff mit einer hohen mechanischen Widerstandsfähigkeit, geeignet als Fußbodenbelag, ***dadurch gekennzeichnet***, daß das Mehrstoffverbundmateral einen heterogenen Aufbau aufweist und aus mindestens einer homogenen PVC-freien flächenförmigen Polymerregion (3), aus einer Durchdringungsregion (4) und aus einer flächenförmigen, faserhaltigen Basisregion (1) besteht, wobei in der Durchdringungsregion (4) Materaleinlagerungen aus dem Polymer der Polymerregion (3) zwischen den Fasern aus der Basisregion (1) bis zu einer definierten Tiefe der faserhaltigen Basisregion (1) vorhanden sind und eine formschlüssige Verbindung zwischen Polymer und Fasern der flächenförmigen faserhaltigen Basisregion (1) besteht.

2. Mehrstoffverbundmaterial aus halogenverbindungsfreiem Kunststoff mit einen hohen mechanischen Widerstandsfähigkeit, geeignet als Fußbodenbelag, ***dadurch gekennzeichnet***, daß das Mehrstoffverbundmateral einen heterogenen Aufbau aufweist und aus mehreren, mindestens aus einer homogenen PVC-freien Polymerregion (3), einem polymeren Verschleißauftrag (6) und einer flächenhaften faserhaltigen Mittelregion (7) besteht, wobei diese flächenförmige faserhaltige Mittelregion (7) zwischen dem polymeren Verschleißauftrag (6) und der Polymerregion (3) vorgesehen ist und sich sowohl zwischen der Polymerregion (3) und dem Verschleißauftrag (6) einerseits und der flächenförmigen faserhaltigen Mittelregion (7) andererseits je eine Durchdringungsregion (4) erstreckt, wobei zwischen den Fasern der flächenförmigen faserhaltigen Mittelregion (7) beidseitig Materaleinlagerungen bis zu einer definierten Einlagerungstiefe aus der Polymerregion (3) und aus dem Verschleißauftrag (6) vorhanden sind und innerhalb der flächenförmigen faserhaltigen Mittelregion (7) eine Grenzschicht und aus den beiden polymeren Materialien liegt, und Fasern der flächenförmigen faserhaltigen Mittelregion (7) sich brückenartig zwischen den beiden Polymermaterialien der Polymerregion (3) und des Verschleißauftrages (6) erstrecken und die Fasern sowohl mit dem Materal der Polymerregion (3) als auch mit dem des Verschleißauftrages (6) eine formschlüssige Verbindung bilden.

3. Mehrstoffverbundmaterial nach Anspruch 1, ***dadurch gekennzeichnet***, daß die flächenförmige, faserhaltige Basisregion (1) mit einer bestimmten, vorwiegend aus farbigen Motiven bestehenden Gestaltungszone (5) versehen ist und die Polymerregion (3) als transparenter Verschleißauftrag (6) ausgebildet ist.

4. Mehrstoffverbundmaterial nach Anspruch 2, ***dadurch gekennzeichnet***, daß die flächenförmige, faserhaltige Mittelregion (7) mit einer bestimmten, vorwiegend aus farbigen Motiven bestehenden Gestaltungszone (5) versehen ist und die Polymerregion (3) transparent oder farbig getönt und der Verschleißauftrag transparent oder farbig ausgebildet ist.

5. Mehrstoffverbundmaterial nach Anspruch 1 bis 4, ***dadurch gekennzeichnet***, daß die zwischen zwei homogenen, nicht verbundfähigen PVC-freien Polymermaterialien vorgesehene, als Haftbrücke dienende flächenförmige faserhaltige Basisregion (1) oder Mittelregion (7) als Träger für die aus ein- oder mehrfarbigen Motiven bestehende Musterung als Gestaltungszone (5) ausgebildet ist.

6. Mehrstoffverbundmaterial nach Anspruch 1 bis 5, ***dadurch gekennzeichnet***, daß die flächenförmige faserhaltige Basisregion (1) oder Mittelregion (7) aus darin geordnet oder ungeordnet liegenden, textilen oder/und mineralischen Fasern besteht.

7. Mehrstoffverbundmaterial nach Anspruch 1 bis 6, ***dadurch gekennzeichnet***, daß der Verschleißauftzrag (6) aus einem Gemisch von einer oder mehreren Olefinkomponenten und einer oder mehreren thermoplastischen Elastomerkomponenten besteht, wobei die Molekülgruppen der Stoffkomponenten ein Durchdringungsnetzwerk bilden, in dem die thermoplastischen Elastomerkomponenten als diskontinuierliche Phase und die Olefinkomponenten als die kontinuierliche Phase im Netzwerkverbund enthalten sind.

8. Mehrstoffverbundmaterial nach Anspruch 1 bis 7**,** ***dadurch gekennzeichnet***, daß die Musterung der Gestaltungszone (5) in der flächenförmigen faserhaltigen Basisregion (1) oder der Mittelregion (7) aus einem im Druckverfahren hergestellten raster-/bzw. teilflächenförmigen Auftrag aus in einem thermoplastischen Bindemittel enthaltenen organischen oder/und anorganischen Farbpigmenten auf einer Innenoberfläche (8) dieser besteht, wobei die Fasern, auf die das Druckmuster aufgebracht ist, als Gestaltungszone (5) vollständig vom Polymer umschlossen sind.

9. Mehrstoffverbundmaterial nach Anspruch 1 bis 8, ***dadurch gekennzeichnet***, daß die flächenförmige faserhaltige Basisregion (1) als eine Haftbrücke zwischen der Polymerregion (3) und einer Verlegeebene (2) für den Fußbodenbelag ausgebildet ist.

10. Mehrstoffverbundmaterial nach Anspruch 1 bis 9, ***dadurch gekennzeichnet***, daß zwischen zwei homogenen nicht verbundfähigen PVC-freien Polymerstoffen eine als Haftbrücke ausgebildete, flächenförmige faserhaltige Region (1; 7) vorgesehen ist.

11. Verfahren zur Herstellung eines flächenförmigen, heterogenen Mehrstoffverbundmaterials, bestehend aus mindestens einem homogenen, halogenverbindungsfreien Kunststoffmaterial und einem als Gestaltungsmaterial und oder als Haftbrücke zu einer Verlegeebene dienenden Fasermaterial, ***dadurch gekennzeichnet***, daß ein Polymer aufgeschmolzen wird, aus dieser Polymerschmelze über eine Formgebungseinrichtung ein aufgeschmolzenes Polymer als Schmelzezone mit einer definierten Dicke hergestellt wird und im Zustand der thermoplastischen Schmelze das Polymer gleichzeitig mit der flächenförmigen faserhaltigen Basisregion (1) bzw. Mittelregion (7), die auf der dem thermoplastischen, polymeren Schmelzefilm zugewandten Fläche keine oder eine farbliche und/oder eine musterhafte Gestaltung aufweist, in den Fügespalt eines aus mindestens zwei Fügemitteln bestehenden Preßwerkes eingeführt wird und unter der Einwirkung einer linien- oder flächenförmig erzeugten, auf die flächenförmigen faserhaltigen Regionen (1; 7) und die aus einem Polymer bestehende Schmelzezone ausgeübten Preßkraft ein Mehrstoffverbund durch Einpressen des Polymers aus der Schmelzezone in die Zwischenräume der die faserhaltigen Regionen (1; 7) bildenden Fasern bis zu einer definierten Tiefe der flächenförmigen faserhaltigen Regionen (1; 7) mit einem formschlüssigen Haftverbund zwischen dem Polymermaterial und den Fasern der faserhaltigen Regionen (1; 7) hergestellt wird und der Mehrstoffverbund anschließend abgekühlt wird.

12. Verfahren zur Herstellung eines flächenförmigen heterogenen Mehrstoffverbundmaterials, bestehend aus mindestens zwei homogenen, halogenverbindungsfreien Kunstoffmaterialien und einem als Gestaltungsmaterial und oder als Haftbrücke zu einer Verlegeebene dienenden Fasermaterial, ***dadurch gekennzeichnet***, daß ein Polymer aufgeschmolzen wird, aus dieser Polymerschmelze über eine Formgebungseinrichtung eine flächenhaft vorgeformte polymere Schmelze mit einer definierten Stärke hergestellt wird und im Zustand der flächenhaft vorgeformten polymeren thermoplastischen Schmelze das Polymer gleichzeitig mit der vorzugsweise aus einem Faservlies bestehenden flächenförmigen faserhaltigen Basisregion (1) bzw. Mittelregion (7), die auf der, der thermoplastischen polymeren Schmelze zugewandten Fläche, eine farbliche und /oder musterhafte Gestaltung aufweist, in einen Fügespalt eines aus mindestens zwei Fügemitteln bestehenden Preßwerkes eingeführt wird und unter der Einwirkung einer linien- oder flächenförmig erzeugten, auf die flächenförmige faserhaltige Basisregion (1) bzw. Mittelregion (7) und die aus einem Polymer bestehende flächenhaft vorgeformte Schmelze ausgeübten Anpreßkraft ein Mehrstoffverbund durch Einpressen des Polymers aus der flächenhaft vorgeformten Schmelze in die Zwischenräume der die flächenförmige faserhaltige Basisregion (1) bzw. Mittelregion (7) bildenden Fasern bis zu einer definierten Tiefe der flächenförmigen faserhaltigen Basisregion (1) bzw. Mittelregion (7) mit einem formschlüssigen Haftverbund zwischen dem die Faserstruktur durchdringenden Polymermaterial und den Fasern hergestellt wird, und darauffolgend dieses Mehrstoffverbundmaterial unter Anwendung der gleichen Verfahrenstechnik mit einem weiteren polymerer Verschleißauftrag (6) versehen wird, wobei dieser im Zustand der thermoplastischen Schmelze auf die erste Polymerregion (3) des Mehrstoffverbundmaterials im thermoplastischen Zustand aufgebracht und anschließend dieser Haftverbund abgekühlt wird.

13. Verfahren zur Herstellung eines flächenförmigen heterogenen Mehrstoffverbundmaterials nach Anspruch 1 bis 12, ***dadurch gekennzeichnet***, daß die erste homogene PVC-freie Polymerregion (3) mit bekannter Technik aus einer Polymerschmelze hergestellt wird und diese als flächenhafte vorgeformte Schmelze im thermoplastischen Zustand einseitig mit einer als Haftbrücke zur Verlegeebene (2) dienenden unbedruckten faserhaltigen flächenförmigen Basisregion (1) und andererseits mit einer als zwischen zwei nicht fügbaren Polymermaterialien der Polymerregion (3) und des Verschleißauftrages (6) dienenden Haftbrücke ausgebildeten faserhaltigen flächenförmigen und gestaltungsfähigen Mittelregion (7) über eine Anpreßkraft ausübende Fügemittel formschlüssig verbunden wird, wobei auf der als Haftbrücke ausgebildeten faserhaltigen flächenförmigen Mittelregion (7) eine weitere, aus PVC-freiem Polymer bestehende, homogener Verschleißauftrag (6), der mit gleicher Verfahrenstechnik aus einer Polymerschmelze erzeugt, im Zustand der thermoplastischen Schmelze in die Faserstruktur des faserförmigen Flächengebildes mittels eine Anpreßkraft ausübenden Fügemitteln eingebracht und mit den Fasern der faserhaltigen flächenförmigen Mittelregion (7) eine formschlüssige Verbindung als Haftbrücke hergestellt wird.

14. Verfahren zur Herstellung eines flächenförmigen heterogenen Mehrstoffverbundmaterials nach Anspruch 1 bis 13, ***dadurch gekennzeichnet***, daß in einem getrennten Verfahren ein formschlüssiger Haftverbund zwischen einem mit einer bekannten Technik aus einer Polymerschmelze hergestellten ersten homogenen PVC-freien Polymer bestehender Verschleißauftrag (6) und einer als Haftbrücke dienenden, bedruckten Mittelregion (7), im thermoplastischen Zustand der Polymerschmelze unter Einwirkung einer durch Fügemittel ausgeübten Kraft hergestellt wird, und anschließend dieser zuvor aus Verschleißauftrag (6) und bedruckter, als Haftbrücke zwischen zwei nicht fügbaren Polymermaterialien dienender Mittelregion (7) bestehende mehrregionaler Haftverbund gleichzeitig mit einem als Haftbrücke zur Verlegeebene (2) dienenden faserhaltigen flächenförmigen Basisregion (1) einem Fügespalt eines aus mindestens zwei Fügemitteln bestehenden Preßwerkes zugeführt wird, wobei gleichzeitig eine aus einer Polymerschmelze in bekannter Weise hergestellte, flächenhaft vorgeformte Polymerschmelze im Zustand der thermoplastischen Schmelze zwischen dem mehrregioinalen Haftverbund und der faserhaltigen flächenförmigen Basisregion (1) eingebracht wird, wobei zwischen dieser und der Polymerregion (3) des Haftverbundes einerseits und der faserhaltigen flächenförmigen Mittelregion (6) andererseits eine formschlüssige Verbindung hergestellt wird.

15. Verfahren zur Herstellung eines flächenförmigen heterogenen Mehrstoffverbundmaterials nach Anspruch 1 bis 14, ***dadurch gekennzeichnet***, daß die faserhaltige flächenförmige Basisregion (1) oder die Mittelregion (7) vor Zuführung mit einer Fügemechanik in den Fügespalt zwischen zwei hierzu vorgesehenen Fügemitteln in einem Druckverfahren unter Einsatz von in einem thermoplastischen Polymer als Bindemittel eingemischten organischen oder/und anorganischen Farbpigmenten mit einer aus farbigen Motiven bestehenden Musterung teilflächenförmig bedruckt wird.

16. Verfahren zur Herstellung eines flächenförmigen heterogenen Mehrstoffverbundmaterials nach Anspruch 1 bis 15, ***dadurch gekennzeichnet***, daß die faserhaltige flächenförmige Basisregion (1) oder die Mittelregion (7) im Rotationstiefdruckverfahren oder im Rotationssiebdruckverfahren oder Thermodruckverfahren mit einer ein- oder mehrfarbigen, aus Motiven bestehenden Musterung bedruckt wird.

17. Verfahren zur Herstellung eines flächenförmigen heterogenen Mehrstoffverbundmaterials nach Anspruch 1 bis 16, ***dadurch gekennzeichnet***, daß durch die dem Fügeespalt zugeführte, erwärmte, d.h. sich im thermoplastischen Zustand befindende Polymerschmelze die mit einem Motiv bedruckte faserhaltige flächenförmige Basisregion (3) bzw. die Mittelregion (7) erwärmt wird und dadurch das für die Druckfarben als Bindemittel verwendete thermoplastische Polymer angeschmolzen und damit haftvermittelnd in die formschlüssige Verbindung zwischen den Fasern der faserhaltigen flächförmigen Basisregion (3) bzw. der Mittel (7) und der Polymerschmelze integriert wird.
